# EUROPEAN PATENT SPECIFICATION

(11) **EP 0 562 581 B1**
(45) Date of publication and mention of the grant of the patent: **18.06.1997**
(21) Application number: 93104884.7
(22) Date of filing: 24.03.1993
(51) Int. Cl.: B60Q 1/068

(54) **Vehicle headlight**
Scheinwerfer für Fahrzeug
Phare pour véhicule

(30) Priority: 27.03.1992 IT TO920276
(43) Date of publication of application: 29.09.1993
(73) Proprietor: MAGNETI MARELLI S.p.A., 20145 Milano (IT)
(72) Inventor: Rivoira, Luigi, I-10090 Sangano (IT)
(74) Representative: Jorio, Paolo

(56) References cited:
- FR-A- 2 379 402

## Description

The present invention relates to a vehicle headlight, as defined in the preamble of claim 1.

In particular, the present invention relates to a headlight of the type comprising a substantially cup-shaped housing with a lateral opening; an adjustable reflector fitted inside the housing so as to rotate in relation to the same about at least a first axis; and an externally operated adjusting device for adjusting the angular position of the reflector in relation to the housing and about said first axis.

The adjusting device comprises a control member extending partly inside the housing through said opening and connected to the reflector; retaining means for securing said control member in relation to said housing and in rotary manner about a respective axis; fluidtight means interposed between the housing and the control member; and step type retaining means interposed between the housing and the control member, for discrete angular positioning of the control member in relation to the housing.

Though widely used, a major drawback of known devices of the aforementioned type is the relatively large number of components and, consequently, the relatively high production and assembly cost involved.

Moreover, sealing between the housing and control member is effected by means of an elastomeric seal, which, in most applications, has very little protection against external pollutants by which the efficiency of the seal is impaired fairly rapidly.

FR-A-2 379 402 shows a vehicle headlight having the features of the preamble of claim 1. In the vehicle headlight the externally operated adjusting device presents a screw nut screw assembly, the screw of which is coupled to the housing by said retaining means. The retaining means comprise two annular bodies of which first one is an annular fluidtight body, which is housed inside the housing, and surrounds the screw, and a second one is a nut screwed on the cited screw to force the fluidtight body against a inner surface of the housing.

It is an object of the present invention to provide a headlight featuring an adjusting device which, as compared with known devices, presents a small number of components for reducing production and assembly cost while at the same time providing for a high degree of reliability.

According to the present invention, there is provided a vehicle headlight as claimed in claim 1.

According to a preferred embodiment, said control member presents a circumferential groove extending inside said housing, and said annular body engages said groove and is positioned contacting a shoulder on the housing.

A non-limiting embodiment of the present invention will be described by way of example with reference to the accompanying drawings, in which:
Fig.1 shows a section of a preferred embodiment of the headlight according to the present invention;
Fig.2 shows a larger-scale section of a detail in Fig.1;
Fig.3 shows a section along line III-III in Fig.2;
Fig.4 shows a section along line IV-IV in Fig.2.

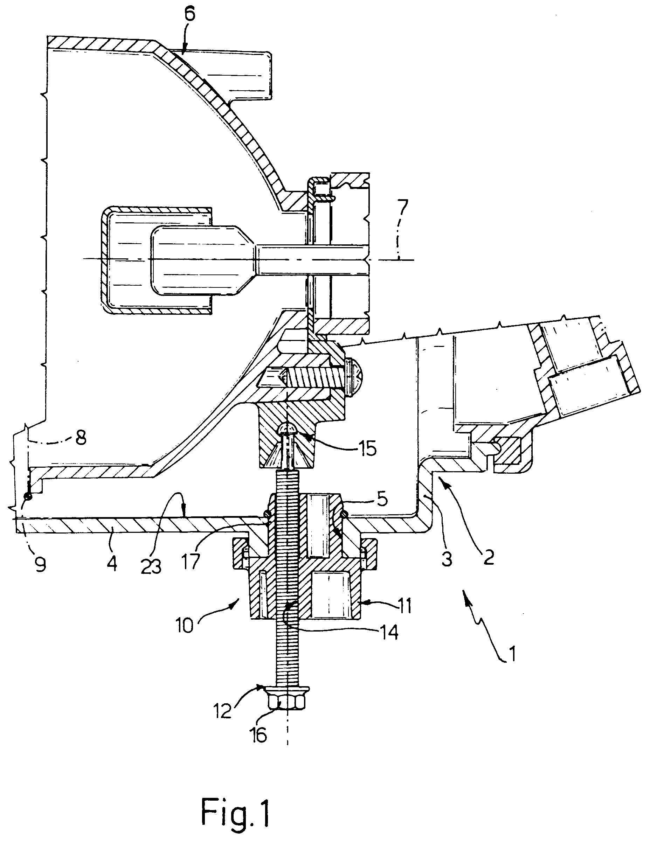

Number 1 in Fig.1 indicates a vehicle headlight comprising a cup-shaped housing 2 in turn comprising an end wall 3, and a lateral wall 4 with a through hole 5. Headlight 1 also comprises an adjustable reflector 6 having an optical axis 7, fitted inside housing 2, and connected in known manner (not shown) to lateral wall 4 of housing 2, so as to rotate about two axes 8 and 9 substantially perpendicular to each other and to optical axis 7. Finally, headlight 1 comprises an adjusting device 10 associated with lateral wall 4 of housing 2, and operated externally for adjusting the angular position of reflector 6 in relation to housing 2 and about axes 8 and 9.

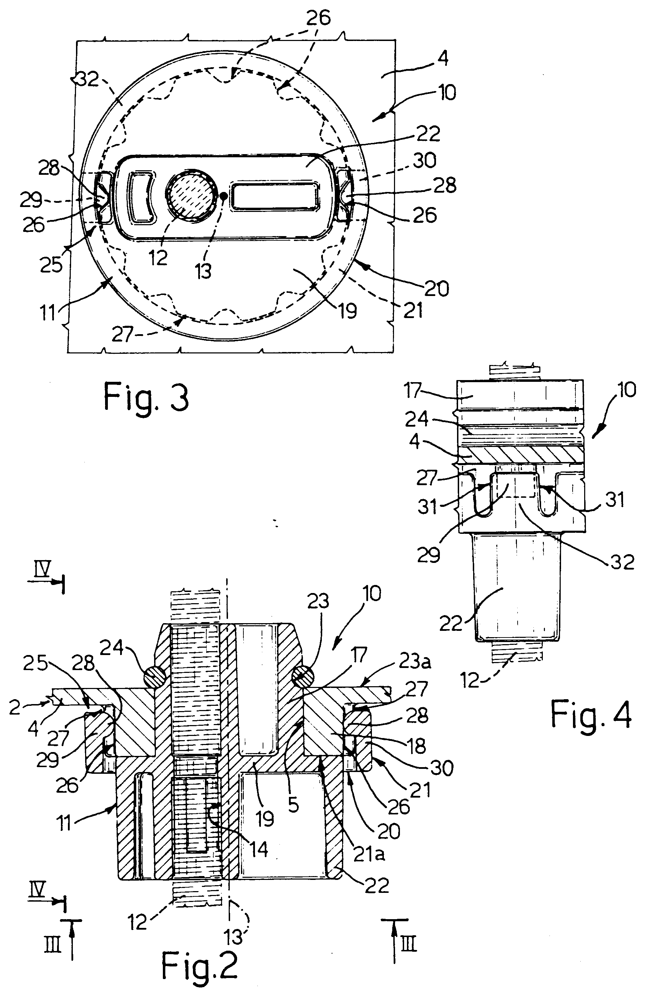

With reference to Fig.1 and, particularly, Fig.2, device 10 comprises a first and second control member 11 and 12, of which the first member 11, conveniently made of plastic material and designed to adjust the angular position of reflector 6 about axis 8, extends partly inside housing 2 through hole 5, and is connected to housing 2 so as to rotate about a respective axis 13 perpendicular to optical axis 7.

The second member 12 is defined by a threaded rod extending through first member 11 inside an eccentric and at least partially threaded hole 14, and having one end facing reflector 6 and connected to the rear portion of the same by means of a known spherical joint 15, and the opposite end connected integral with a nut 16 for enabling rotation of the rod in relation to first member 11 and so adjusting the angular position of reflector 6 about axis 9.

With reference to Fig.2 in particular, first member 11 comprises an end portion 17 extending partly inside housing 2 through hole 5, and engaging in rotary manner a cylindrical collar 18 surrounding hole 5 and extending outwards coaxially with the axis of hole 5.

The end of portion 17 opposite that facing reflector 6 is connected stably to the inner surface of the bottom wall 19 of a cup-shaped body 20, which also comprises a lateral wall 21 coaxial with and surrounding collar 18. Bottom wall 19 extends perpendicular to axis 13, with its inner surface contacting the front surface 21a of collar 18, and is fitted integral with an operating knob 22 located on the opposite side of bottom wall 19 in relation to portion 17, for rotating first member 11 in relation to housing 2 and about axis 13.

Portion 17 presents a circumferential groove 23 formed in the portion of portion 17 extending inside housing 2, located adjacent to inner surface 23a of housing 2, and defining a seat for an elastic ring 24 of elastomeric material. More specifically, groove 23 is formed at such a distance from wall 19 that ring 24 contacts a shoulder defined by inner surface 23a of housing 2, and so provides simultaneously for sealing between first member 11 and housing 2, as well as for acting as a retaining element for securing first member 11 axially in relation to housing 2.

With reference to Fig.s 2 and 3, adjusting device 10 also comprises a step type angular retaining device 25 enabling first member 11 to rotate in steps in relation to housing 2 and between a number of discrete angular positions, each corresponding to a given angular position of reflector 6 in relation to housing 2.

Device 25 comprises a number of equally-spaced outer axial grooves 26 formed on the outer surface 27 of collar 18, and each of which is substantially V-shaped with its concavity facing lateral wall 21 of cup-shaped body 20.

Device 25 also comprises a pair of projections 28 facing surface 27 of collar 18, diametrically opposed in relation to collar 18, and each engaging a respective groove 26 as first member 11 is rotated about respective axis 13. More specifically, each projection 28 presents a cross section substantially in the form of an isosceles triangle with a rounded apex facing the bottom of grooves 26, and is connected integral with a free end portion of a respective elastic appendix 29, 30 forming part of lateral wall 21 and formed from the same by means of two longitudinal openings 31 (Fig.4).

In actual use, knob 22 provides for rotating first control member 11 about axis 13 and so moving projections 28 from one groove 26 to the next by elastically deforming appendixes 29. When first member 11 is rotated, second member 12 is moved transversely in relation to its axis and along an eccentric path in relation to rotation axis 13 of first member 11, so as to rotate reflector 6 about axis 8 and into a different angular position in relation to housing 2. At this point, adjustment of nut 16 provides for axially displacing the rod in relation to first member 11 and so adjusting the angular position of reflector 6 about axis 9.

According to a variation not shown, control device 10 only comprises first control member 11 for adjusting the angular position of reflector 6 about axis 8, second member 12 being replaced by an appendix having one end connected integral with first member 11, and the opposite end connected to reflector 6 via spherical joint 15.

## Claims

1. A vehicle headlight (1) comprising a housing (2) with a lateral opening (5); an adjustable reflector (6) fitted inside the housing (2) so as to rotate in relation to the same about at least a first axis (8); and externally operated adjusting means (10) for adjusting the angular position of the reflector (6) in relation to the housing (2) and at least about said first axis (8); the adjusting means (10) comprising a control member (11) extending partly inside the housing (2) through said opening (5) and connected to said reflector (6); securing means (24) for securing said control member (11) in relation to said housing (2) and in rotary manner about a respective axis (13) and comprising an annular body (24) of elastomeric material interposed between said control member (11) and said housing (2); characterized by the fact that said adjusting means (10) further comprise a step type retaining means (25) interposed between the housing (2) and the control member (11), for discrete angular positioning of the control member (11) in relation to the housing (2), and fluidtight means (24) interposed between the housing (2) and the control member (11); and by the fact that the securing means and the fluidtight means constitute a single common element which is said annular body (24).

2. A headlight as claimed in Claim 1, characterized by the fact that said control member (11) presents a circumferential groove (23) extending inside said housing (2); and said annular body (24) engages said groove (23) and contacts a shoulder (23a) on the housing (2).

3. A headlight as claimed in Claim 1 or 2, characterized by the fact that said step type retaining means (25) comprise a number of cavities (26) on one (2) of either said housing (2) or said control member (11), and at least one projection (28) on the other (11) of either said housing (2) or said control member (11), which projection (28) provides for selectively engaging each said cavity (26) as said control member (11) is rotated about said respective axis (13), for maintaining said control member (11) in a given angular position and said reflector (6) in a corresponding angular position in relation to said housing (2).

4. A headlight as claimed in Claim 3, characterized by the fact that said control member (11) comprises elastic means (29) associated with said projection (28), for clicking said projection (28) inside said cavity (26).

5. A headlight as claimed in Claim 3 or 4, characterized by the fact that said housing (2) comprises a tubular appendix (18) coaxial with said opening (5) and extending outwards; said cavities (26) being distributed over the outer lateral surface (27) of said tubular appendix (18); and said elastic means comprising two elastic appendixes (29,30) integral with said control member (11), extending from diametrically-opposed sides of said tubular appendix (18), and facing said cavities (26); each said appendix (29,30) supporting a respective said projection (28).

6. A headlight as claimed in any one of the foregoing Claims, characterized by the fact that it comprises connecting means (12) for connecting said control member (11) to said reflector (6); said connecting means comprising a threaded rod (12) extending through said control member (11) and engaging an eccentric threaded hole (14); said rod (12) presenting one end connected to said reflector (6), and the opposite end projecting outwards of said control member (11), and being rotatable in relation to the control member (11) for adjusting the angular position of the reflector (6) about a second axis (9) substantially perpendicular to said first axis (8).

## Patentansprüche

1. Ein Fahrzeugscheinwerfer (1), umfassend ein Gehäuse (2) mit einer seitlichen Öffnung (5), einen einstellbaren Reflektor (6), der innerhalb des Gehäuses (2) so angebracht ist, daß er relativ zu demselben um zumindest eine erste Achse (8) drehbar ist, und extern betätigte Einstellmittel (10) für das Einstellen der Winkelposition des Reflektors (6) relativ zu dem Gehäuse (2) und zumindest um die genannte erste Ache (8), wobei die Einstellmittel (10) ein Steuerglied (11) umfassen, das sich teilweise innerhalb des Gehäuses (2) durch die Öffnung (5) erstreckt und mit dem Reflektor (6) verbunden ist, mit Sicherungsmitteln (24) für das Sichern des Steuergliedes (11) relativ zu dem Gehäuse (2) und drehbeweglich um eine entsprechende Achse (13), und mit einem ringförmigen Korpus (24) aus Elastomermaterial, eingefügt zwischen dem Steuerglied (11) und dem Gehäuse (2), **dadurch gekennzeichnet**, daß die Einstellmittel (10) ferner ein stufenartiges Haltemittel (25) umfassen, eingefügt zwischen dem Gehäuse (2) und dem Steuerglied (11) für diskrete Winkelpositionierung des Steuergliedes (11) relativ zu dem Gehäuse (2), und fluiddichte Mittel (24), eingefügt zwischen dem Gehäuse (2) und dem Steuerglied (11), und daß das Sicherungsmittel und das fluiddichte Mittel ein einziges, gemeinsames Element bilden, welches der ringförmige Korpus (24) ist.

2. Ein Scheinwerfer nach Anspruch 1, dadurch gekennzeichnet, daß das Steuerglied (11) eine Umfangsnut (23) aufweist, die sich innerhalb des Gehäuses (2) erstreckt und der ringförmige Korpus (24) in die Nut (23) eingreift und eine Schulter (23a) an dem Gehäuse (2) kontaktiert.

3. Ein Scheinwerfer nach Anspruch 1 oder 2, dadurch gekennzeichnet, daß das stufenartige Haltemittel (25) eine Anzahl von Ausnehmungen (26) auf einem (2) von entweder dem Gehäuse (2) oder dem Steuerglied (11) umfaßt und zumindest einen Vorsprung (28) auf dem anderen (11) von entweder dem Gehäuse (2) oder dem Steuerglied (11), welcher Vorsprung (28) für selektiven Eingriff in jede der Ausnehmungen (26) sorgt, wenn das Steuerglied (11) um die entsprechende Achse (13) verdreht wird, um das Steuerglied (11) in einer gegebenen Winkelposition und den Reflektor (6) in einer entsprechenden Winkelposition relativ zu dem Gehäuse (2) zu halten.

4. Ein Scheinwerfer nach Anspruch 3, dadurch gekennzeichnet, daß das Steuerglied (11) elastische Mittel (29) in Verbindung mit dem Vorsprung (28) umfaßt für das Verrasten des Vorsprungs (28) innerhalb der Ausnehmung (26).

5. Ein Scheinwerfer nach Anspruch 3 oder 4, dadurch gekennzeichnet, daß das Gehäuse (2) einen rohrförmigen Fortsatz (18) koaxial mit der Öffnung (5) und sich nach außen erstreckend umfaßt, daß die Ausnehmungen (26) über die äußere Seitenoberfläche (27) des rohrförmigen Fortsatzes (18) verteilt sind und daß die elastischen Mittel zwei elastische Fortsätze (29,30) einstückig mit dem Steuerglied (11) umfassen, die sich von diametral gegenüberliegenden Seiten des rohrförmigen Fortsatzes (18) erstrecken und den Ausnehmungen (26) zugewandt sind, wobei jeder Fortsatz (29,30) einen entsprechenden Vorsprung (28) trägt.

6. Ein Scheinwerfer nach einem der vorangehenden Ansprüche, dadurch gekennzeichnet, daß er Verbindungsmittel (12) für das Verbinden des Steuergliedes (11) mit dem Reflektor (6) umfaßt, welche Verbindungsmittel einen Gewindebolzen (12) umfassen, der sich durch das Steuerglied (11) erstreckt und in ein exzentrisches Gewindeloch (14) eingreift, daß der Bolzen (12) ein mit dem Reflektor (6) verbundenes Ende aufweist und das gegenüberliegende Ende nach außen bezüglich des Steuergliedes (11) herausragt und daß der Bolzen relativ zu dem Steuerglied (11) drehbeweglich ist für das Einstellen der Winkelposition des Reflektors (6) um eine zweite Achse (9), die im wesentlichen senkrecht zu der ersten Achse (8) ist.

## Revendications

1. Phare (1) pour véhicule comportant un boîtier (2) pourvu d'une ouverture latérale (5); un réflecteur réglable (6) monté à l'intérieur du boîtier (2) de manière à tourner par rapport à ce dernier autour d'au moins premier axe fixe (8); et des moyens de réglage (10) actionnés de l'extérieur pour régler la position angulaire du réflecteur (6) par rapport au boîtier (2) et au moins autour dudit premier axe (8); les moyens de réglage (10) comprenant un élément de commande (11) s'étendant en partie à l'intérieur du boîtier (2) à travers ladite ouverture (5) et connecté audit réflecteur (6); des moyens de fixation (24) pour fixer ledit élément de commande (11) par rapport audit boîtier (2) et de manière à pouvoir tourner autour d'un axe respectif (13), et comprenant un corps annulaire (24) formé d'un matériau élastomère et intercalé entre ledit élément de commande (11) et ledit boîtier (2); caractérisé par le fait que lesdits moyens de réglage (10) comprennent en outre des moyens de retenue (25) du type à parties étagées, intercalés entre le boîtier (2) et l'élément de commande (11), pour un positionnement angulaire discret de l'élément de commande (11) par rapport au boitier (2), et des moyens (24) d'étanchéité aux fluides, intercalés entre le boîtier (2) et l'élément de commande (11), et par le fait que les moyens de fixation et les moyens d'étanchéité aux fluides sont constitués par un seul élément commun qui est ledit corps annulaire (24).

2. Phare selon la revendication 1, caractérisé par le fait que ledit élément de commande (11) possède une gorge circonférentielle (23) qui s'étend à l'intérieur dudit boîtier (2): et que ledit corps annulaire (24) s'engage dans ladite gorge (23) et est en contact avec un épaulement (23a) situé sur le boîtier (2).

3. Phare selon la revendication 1 ou 2, caractérisé par le fait que lesdits moyens de retenue (25) du type à parties étagées comprennent un certain nombre de cavités (25) sur l'un (2) dudit boîtier (2) et dudit élément de commande (11), et au moins une partie saillante (28) située sur l'autre (11) dudit boîtier (2) et dudit élément de commande (11), laquelle partie saillante (28) permet l'engagement sélectif dans chacune desdites cavités (26) lorsqu'on fait tourner ledit élément de commande (11) autour dudit axe respectif (13), pour maintenir ledit élément de commande (11) dans une position angulaire donnée et ledit réflecteur (6) dans une position angulaire correspondante par rapport audit boîtier (2).

4. Phare selon la revendication 3, caractérisé en ce que ledit élément de commande (11) comprend des moyens élastiques (29) associés à ladite partie saillante (28), pour encliqueter ladite partie saillante (28) à l'intérieur de ladite cavité (26).

5. Phare selon l'une des revendications 3 ou 4, caractérisé par le fait que ledit boîtier (2) comprend un appendice tubulaire (18) coaxial à ladite ouverture (5) et s'étendant à l'extérieur; lesdites cavités (26) étant réparties sur la surface latérale extérieure (27) dudit appendice tubulaire (18); et lesdits moyens élastiques comprenant deux appendices élastiques (29,30) solidaires dudit élément de commande (11), s'étendant à partir de cotés diamétralement opposés dudit appendice tubulaire (18), et faisant face auxdites cavités (26); chacun desdits appendices (29,30) supportant l'une respective desdites parties saillantes (28).

6. Phare selon l'une quelconque des revendications précédentes, caractérisé par le fait qu'il comprend des moyens de liaison (12) pour relier ledit élément de commande (11) audit réflecteur (6); lesdits moyens de liaison comprenant une tige filetée (12) qui traverse ledit élément de commande (11) et s'engage dans un trou excentrique taraudé (14); ladite tige (12) comportant une extrémité reliée audit réflecteur (6) et l'extrémité opposée faisant saillie à l'extérieur dudit élément de commande (11), et pouvant tourner par rapport à l'élément de commande (11) pour régler la position angulaire du réflecteur (6) autour d'un second axe (9) essentiellement perpendiculaire audit premier axe (8).
